# EUROPEAN PATENT APPLICATION

(11) **EP 4 819 117 A1**
(43) Date of publication of application: **07.10.2026**
(21) Application number: 23960886.2
(22) Date of filing: 04.12.2023
(51) Int. Cl.: G09G 3/3208, H04N 5/63, G06F 1/26, H02M 1/08

(54) **VIDEO DISPLAY DEVICE AND METHOD FOR OPERATING SAME**

(71) Applicant: LG Electronics Inc., Yeongdeungpo-gu Seoul 07336 (KR)
(72) Inventor: JANG, Jinhaeng, Seoul 06772 (KR); BAEK, Seunghun, Seoul 06772 (KR)
(74) Representative: Vossius & Partner Patentanwälte Rechtsanwälte mbB
(86) International application number: PCT/KR2023/019827
(87) International publication number: WO 2025/121456

(57) **Abstract**

The present disclosure relates to an image display apparatus and a method of operating the same. The image display apparatus according to an embodiment of the present disclosure includes: a display; a power supply configured to supply driving power to the display; and a controller, wherein the power supply includes a full-bridge converter including a plurality of switching elements, wherein the controller is configured to calculate a first switching frequency corresponding to a pulse frequency modulation (PFM) method, and control the plurality of switching elements based on the first switching frequency according to the PFM method in response to the first switching frequency being less than a predetermined maximum frequency and control the plurality of switching elements based on a second switching frequency according to a phase shift method in response to the first switching frequency being greater than or equal to the maximum frequency.

## Description

### [Technical Field]

The present disclosure relates to an image display apparatus and a method thereof.

### [Background Art]

An image display apparatus or device has the function of displaying an image that can be viewed by a user. For example, the image display apparatus may include a television (TV), a monitor, a notebook computer, or the like including a liquid crystal display (LCD) using liquid crystals or an OLED display using an organic light emitting diode (hereinafter, OLED).

Generally, an electronic device, such as an image display apparatus, includes a power supply unit (PSU) that supplies driving power. In addition, an electronic device utilizing AC power can include a component for efficient power usage. For example, the electronic device can include a Power Factor Correction (PFC) circuit that corrects a power factor of input power, a converter that adjusts a voltage output from the PFC circuit, etc.

Meanwhile, in the case where a resonant converter that operates using Pulse Frequency Modulation (PFM) is applied to the power supply unit, a switching frequency for operating switching elements is adjusted according to the size of a load. As the load decreases, the switching frequency increases, and as a voltage output from a converter decreases, the switching frequency in light load conditions with a small load can increase even further.

However, as the switching frequency increases, problems occur in that switching loss of switching elements increases, core loss of a resonant tank increases, etc. In addition, electromagnetic interference (EMI) is one of important issues in terms of design of the power supply unit utilizing a switching operation. If the switching frequency increases to a certain frequency value, for example, 150 kHz or higher, an EMI filter needs to be added to the power supply unit to satisfy requirements regarding conducted emissions (CE). As a result, problems occur such as an increase in the size of the power supply unit, higher production costs, complex implementation, etc. In addition, if a limited value is set for the switching frequency to prevent an excessive increase in the switching frequency, there is a problem in that variable displacement of the voltage output from the converter is limited.

### [Disclosure of invention]

### [Technical Problem]

It is an objective of the present disclosure to solve the above and other problems.

It is another objective of the present disclosure to provide an image display apparatus capable of changing a method of controlling switching elements according to a frequency band of a switching frequency based on a change in load, and a method of operating the same.

It is yet another objective of the present disclosure to provide an image display apparatus capable of changing a method of controlling switching elements according to a frequency band of a switching frequency based on a magnitude of a voltage output from a transformer circuit, and a method of operating the same.

It is still another objective of the present disclosure to provide an image display apparatus including a transformer optimized for various methods of controlling switching elements, and a method of operating the same.

### [Solution to Problem]

In accordance with an aspect of the present disclosure, the above and other objectives can be accomplished by providing an image display apparatus including: a display; a power supply configured to supply driving power to the display; and a controller, wherein the power supply includes a full-bridge converter including a plurality of switching elements, wherein the controller is configured to calculate a first switching frequency corresponding to a pulse frequency modulation (PFM) method, and control the plurality of switching elements based on the first switching frequency according to the PFM method in response to the first switching frequency being less than a predetermined maximum frequency and control the plurality of switching elements based on a second switching frequency according to a phase shift method in response to the first switching frequency being greater than or equal to the maximum frequency.

In accordance with another aspect of the present disclosure, the above and other objectives can be accomplished by providing a method of operating an image display apparatus including a full-bridge converter, the method including: calculating a first switching frequency corresponding to a pulse frequency modulation (PFM) method; in response to the first switching frequency being less than a predetermined maximum frequency, controlling a plurality of switching elements included in the full-bridge converter based on the first switching frequency according to the PFM method; and in response to the first switching frequency being greater than or equal to the maximum frequency, controlling the plurality of switching elements based on a second switching frequency according to a phase shift method.

### [Advantageous Effects of Disclosure]

An image display apparatus and a method of operating the same according to the present disclosure have the following effects.

According to at least one of the embodiments of the present disclosure, the method of controlling switching elements can be changed according to a frequency band of the switching frequency based on a change in load, thereby limiting an excessive increase in the switching frequency.

According to at least one embodiment of the present disclosure, the method of controlling the switching elements can be changed according to a frequency band of the switching frequency based on a magnitude of the output voltage, thereby limiting an excessive increase in the switching frequency.

According to at least one embodiment of the present disclosure, electromagnetic compatibility (EMC) can be improved without using an additional EMI filter, thereby preventing an increase in the size of the power supply and an increase in production costs.

According to at least one embodiment of the present disclosure, a transformer optimized for various methods of controlling switching elements can be provided.

Further scope of applicability of the present disclosure will become apparent from the detailed description given hereinafter. However, it should be understood that the detailed description and specific examples, while indicating preferred embodiments of the present disclosure, are given by illustration only, since various changes and modifications within the idea and scope of the present disclosure will become apparent to those skilled in the art from this detailed description.

### [Brief Description of Drawings]

FIG. 1 is a diagram illustrating an image display system according to an embodiment of the present disclosure.
FIG. 2 is an internal block diagram of an image display apparatus of FIG. 1.
FIG. 3 is an internal block diagram of a controller of FIG. 2.
FIG. 4A is a diagram showing a method of controlling a remote controller of FIG. 2 and FIG. 4B is an internal block diagram of the remote controller of FIG. 2.
FIG. 5 is an internal block diagram of a display of FIG. 2.
FIGS. 6A and 6B are diagrams referred to in the description of an organic light emitting panel of FIG. 5.
FIG. 7 is an internal block diagram of a power supply unit of FIG. 2.
FIG. 8 is an internal circuit diagram of a transformer circuit of FIG. 7.
FIGS. 9A and 9B are flowcharts illustrating a method of operating an image display apparatus according to an embodiment of the present disclosure.
FIGS. 10 to 14 are diagrams referred to in the description of operation of an image display apparatus according to embodiments of the present disclosure.
FIG. 15 is an exploded perspective view of a transformer according to embodiments of the present disclosure.

### [Mode of Disclosure]

Hereinafter, the present disclosure will be described in detail with reference to the drawings. In the drawings, in order to clearly and concisely describe the present disclosure, parts that are not related to the description are omitted, and the same drawing reference numerals are used for identical or extremely similar parts throughout the specification.

The suffixes "module" and "part" used for components in the following description are given simply for the convenience of writing this specification, and do not in themselves impart any particularly important meaning or role. Therefore, the above "module" and "part" may be used interchangeably.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

In addition, in this specification, terms such as first, second, etc. may be used to describe various elements, but these elements are not limited by these terms. These terms are used only to distinguish one element from another.

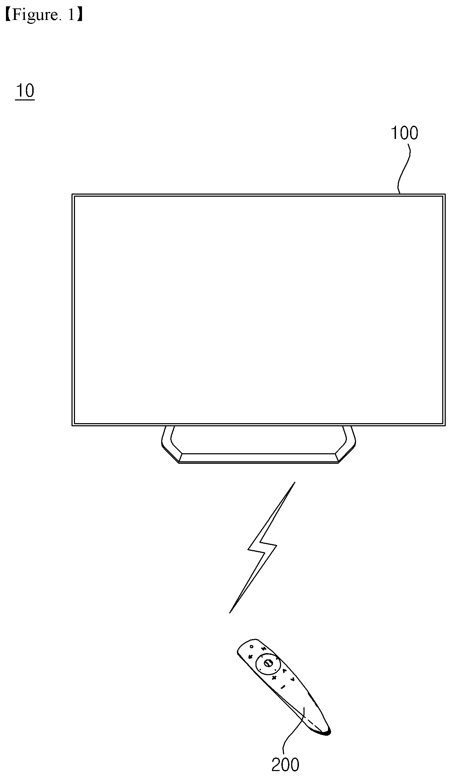

FIG. 1 is a diagram illustrating an image display system according to various embodiments of the present disclosure.

Referring to FIG. 1, an image display system 10 may include an image display apparatus 100 and/or a remote controller 200.

The image display apparatus 100 may be an apparatus that processes and outputs images. The image display apparatus 100 is not particularly limited as long as it may output a screen corresponding to image signals, such as a TV, laptop computer, or monitor.

The image display apparatus 100 may receive a broadcast signal, process the received broadcast signal, and output a processed broadcast image. When the image display apparatus 100 receives a broadcast signal, the image display apparatus 100 may correspond to a broadcast receiving device.

The image display apparatus 100 may receive broadcast signals wirelessly through an antenna or may receive broadcast signals by wire through a cable. For example, the image display apparatus 100 may receive terrestrial broadcast signals, satellite broadcast signals, cable broadcast signals, and Internet protocol television (IPTV) broadcast signals.

The remote controller 200 may be connected to the image display apparatus 100 by wire and/or wirelessly and provide various control signals to the image display apparatus 100. Here, the remote controller 200 may include a device which establishes a wired or wireless network with the image display apparatus 100 to transmit various control signals to the image display apparatus 100 or receive signals related to various operations processed in the image display apparatus 100 from the image display apparatus 100.

For example, various input devices, such as a mouse, keyboard, spatial remote control, trackball, and joystick may be used as the remote controller 200. The remote controller 200 may be referred to as an external device, and hereinafter, it should be noted that the external device and the remote controller may be used interchangeably as needed.

The image display apparatus 100 may be connected to only a single remote controller 200 or simultaneously connected to two or more remote controllers 200 and change an object displayed on the screen or adjust a state of the screen based on a control signal provided from each remote controller 200.

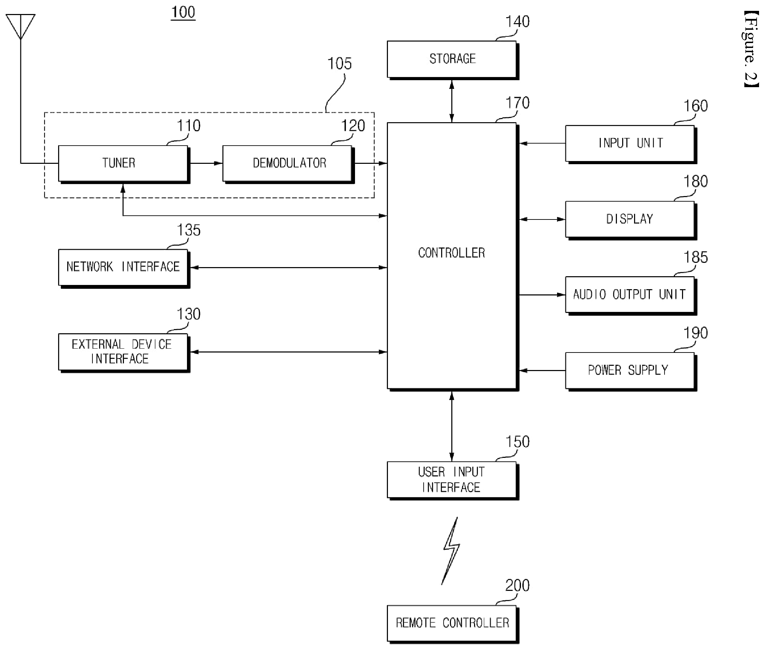

FIG. 2 is an internal block diagram of the image display apparatus of FIG. 1.

Referring to FIG. 2, the image display apparatus 100 may include a broadcast receiver 105, an external device interface 130, a network interface 135, a storage 140, a user input interface 150, an input interface 160, a controller 170, a display 180, an audio output unit 185, and/or a power supply 190.

The broadcast receiver 105 may include a tuner 110 and a demodulator 120.

Meanwhile, unlike the drawing, the image display apparatus 100 may include only the broadcast receiver 105 and the external device interface 130, among the broadcast receiver 105, the external device interface 130, and the network interface 135. That is, the image display apparatus 100 may not include the network interface 135.

The tuner 110 may select a broadcast signal corresponding to a channel selected by the user or all previously stored channels among broadcast signals received through an antenna (not shown) or a cable (not shown). The tuner 110 may convert the selected broadcast signal into an intermediate frequency signal or a baseband image or audio signal.

For example, if the selected broadcast signal is a digital broadcast signal, the tuner 110 may convert the digital broadcast signal into a digital IF signal (DIF), and if the selected broadcast signal is an analog broadcast signal, the tuner 110 may convert the analog broadcast signal into an analog baseband image or audio signal (CVBS/SIF). That is, the tuner 110 may process digital broadcast signals or analog broadcast signals. The analog baseband image or audio signal (CVBS/SIF) output from the tuner 110 may be directly input to the controller 170.

Meanwhile, the tuner 110 may sequentially select broadcast signals of all broadcast channels stored through a channel memory function from received broadcast signals and convert them into intermediate frequency signals or baseband image or audio signals.

Meanwhile, the tuner 110 may include multiple tuners in order to receive broadcast signals of multiple channels. Alternatively, a single tuner that simultaneously receives broadcast signals from multiple channels may also be provided.

The demodulator 120 may receive the converted digital IF signal (DIF) from the tuner 110 and perform a demodulation operation.

The demodulator 120 may output a stream signal TS after performing demodulation and channel decoding. Here, the stream signal may be a signal in which an image signal, audio signal, or data signal are multiplexed.

The stream signal output from the demodulator 120 may be input to the controller 170. After performing demultiplexing and image/audio signal processing, the controller 170 may output an image through the display 180 and voice through the audio output unit 185.

The external device interface 130 may transmit or receive data to or from a connected external device. To this end, the external device interface 130 may include an A/V input/output interface (not shown).

The external device interface 130 may be connected to external devices by wire/wirelessly, such as a digital versatile disk (DVD), Blu ray, game device, camera, camcorder, computer (laptop), set-top box, etc. and perform input/output operations with external devices.

In addition, the external device interface 130 may establish a communication network with various remote controllers 200 as shown in FIG. 1 to receive a control signal related to an operation of the image display apparatus 100 from the remote controller 200 or transmit data related to an operation of the image display apparatus 100 to the remote controller 200.

The A/V input/output interface may receive image and audio signals from an external device. For example, the A/V input/output interface may include an Ethernet terminal, universal serial bus (USB) terminal, composite image banking sync (CVBS) terminal, component terminal, S-video terminal (analog), digital visual interface (DVI) terminal, high definition multimedia interface (HDMI) terminal, mobile high-definition link (MHL) terminal, RGB terminal, D-SUB terminal, IEEE 1394 terminal, SPDIF terminal, liquid HD terminal, etc. Digital signals input through these terminals may be transmitted to the controller 170. Here, analog signals input through the CVBS terminal and the S-video terminal may be converted into digital signals through an analog-to-digital converter (not shown) and transmitted to the controller 170.

The external device interface 130 may include a wireless communication interface (not shown) for short-range wireless communication with other electronic devices. Through the wireless communication interface, the external device interface 130 may exchange data with an adjacent mobile terminal. For example, the external device interface 130 may receive device information, executed application information, application images, etc. from the mobile terminal in a mirroring mode.

The external device interface 130 may perform short-range wireless communication using Bluetooth, radio frequency identification (RFID), Infrared data association (IrDA), ultra-wideband (UWB), ZigBee, etc.

The network interface 135 may provide an interface for connecting the image display apparatus 100 to a wired/wireless network including the Internet.

The network interface 135 may include a communication module (not shown) for connection to a wired/wireless network. For example, the network interface 135 may include a communication module for wireless LAN (WLAN), (Wi-Fi), wireless broadband (Wibro), world interoperability for microwave Access (Wimax), and high speed downlink packet access (HSDPA).

The network interface 135 may transmit or receive data with other users or other electronic devices through a connected network or another network linked to the connected network.

The network interface 135 may receive web content or data provided by a content provider or network operator. That is, the network interface 135 may receive content, such as movies, advertisements, games, VOD, broadcasting, etc. and information related thereto provided from a content provider or network provider through a network.

The network interface 135 may receive firmware update information and update files provided by a network operator and transmit data to an Internet or content provider or a network operator.

The network interface 135 may select and receive a desired application from among applications open to the public through a network.

The storage 140 may store programs for processing and controlling each signal in the controller 170 or store signal-processed image, audio, or data signals. For example, the storage 140 may store application programs designed for the purpose of performing various tasks that may be processed by the controller 170, and selectively provide some of the stored application programs at the request of the controller 170.

Programs stored in the storage 140 are not particularly limited as long as they may be executed by the controller 170.

The storage 140 may perform a function for temporarily storing image, audio, or data signals received from an external device through the external device interface 130.

The storage 140 may store information on a certain broadcast channel through a channel memory function, such as a channel map.

Although FIG. 2 shows an embodiment in which the storage 140 is provided separately from the controller 170, the scope of the present disclosure is not limited thereto, and the storage 140 may be included in the controller 170.

The storage 140 may include at least one of a volatile memory (e.g., DRAM, SRAM, SDRAM, etc.), non-volatile memory (e.g., flash memory, hard disk drive (HDD), and solid state drive (SSD), etc.). In various embodiments of the present disclosure, the storage 140 and memory may be used interchangeably.

The user input interface 150 may transmit a signal input by the user to the controller 170 or transmit a signal from the controller 170 to the user.

For example, the user input interface 150 may transmit/receive a user input signal, such as power ON/OFF, channel selection, and screen setting from the remote controller 200, transmit a user input signal input from a local key (not shown), such as a power key, channel key, volume key, and setting value (not shown), transmit a user input signal input from a sensor (not shown) sensing a user's gesture to the controller 170, or transmit a signal from the controller 170 to the sensor.

The input unit 160 may be provided on one side of a main body of the image display apparatus 100. For example, the input unit 160 may include a touch pad, physical buttons, etc.

The input unit 160 may receive various user commands related to the operation of the image display apparatus 100 and transmit control signals corresponding to the input commands to the controller 170.

The input unit 160 may include at least one microphone (not shown) and may receive the user's voice through the microphone.

The controller 170 may include at least one processor, and may control the overall operation of the image display apparatus 100 using the processor included therein. Here, the processor may be a general processor, such as a central processor (CPU). Of course, the processor may be a dedicated device, such as an ASIC, or another hardware-based processor.

The controller 170 may demultiplex a stream input through the tuner 110, demodulator 120, external device interface 130, or network interface 135 or process demultiplexed signals to generate and output signals for image or audio output.

The display 180 may convert an image signal, data signal, OSD signal, and control signal processed by the controller 170 or an image signal, data signal, and control signal received from the external device interface 130 to generate a driving signal.

The display 180 may include a display panel (not shown) having a plurality of pixels.

A plurality of pixels provided in the display panel may include RGB subpixels. Alternatively, a plurality of pixels provided in the display panel may include RGBW subpixels. The display 180 may convert the image signals, data signal, OSD signal, and control signal processed by the controller 170 to generate a driving signal for a plurality of pixels.

The display 180 may be a plasma display panel (PDP), liquid crystal display (LCD), organic light emitting diode (OLED), or flexible display and may be a 3D display. The 3D display 180 may be divided into a glasses-free type and a glasses type.

Meanwhile, the display 180 may be configured as a touch screen and used as an input device in addition to an output device.

The audio output unit 185 receives an audio-processed signal from the controller 170 and outputs the same as voice.

The image signal processed by the controller 170 may be input to the display 180 and displayed as an image corresponding to the image signal. In addition, the image signal processed by the controller 170 may be input to an external output device through the external device interface 130.

The voice signal processed by the controller 170 may be output as sound to the audio output unit 185. In addition, the voice signal processed by the controller 170 may be input to an external output device through the external device interface 130.

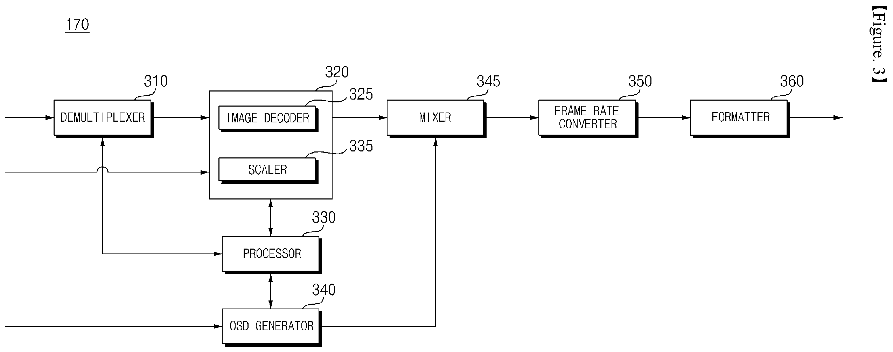

Although not shown in FIG. 2, the controller 170 may include a demultiplexer, an image processor, etc. This will be described below with reference to FIG. 3.

In addition, the controller 170 may control overall operations within the image display apparatus 100. For example, the controller 170 may control the tuner 110 to select (tune) a broadcast corresponding to a channel selected by the user or a previously stored channel.

In addition, the controller 170 may control the image display apparatus 100 by a user command input through the user input interface 150 or an internal program.

Meanwhile, the controller 170 may control the display 180 to display an image. Here, the image displayed on the display 180 may be a still image or a moving image and may be a 2D image or a 3D image.

Meanwhile, the controller 170 may cause a certain 2D object to be displayed in the image displayed on the display 180. For example, the object may be at least one of a connected web screen (newspaper, magazine, etc.), an electronic program guide (EPG), various menus, a widget, an icon, a still image, a moving image, and a text.

Meanwhile, the image display apparatus 100 may further include an image capture device (not shown). The image capture device may image the user. The image capture device may be implemented as one camera, but is not limited thereto and may also be implemented as a plurality of cameras. Meanwhile, the image capture device may be embedded in the image display apparatus 100 in an upper portion of the display 180 or may be disposed separately. Image information captured by the image capture device may be input to the controller 170.

The controller 170 may recognize the user's position based on the image captured by the image capture device. For example, the controller 170 may determine a distance (z-axis coordinate) between the user and the image display apparatus 100. In addition, the controller 170 may recognize the x-axis coordinates and y-axis coordinates in the display 180 corresponding to the user's position.

The controller 170 may detect a user's gesture based on each or a combination of an image captured by the image capture device or a sensed signal from the sensor.

The power supply 190 may supply corresponding power throughout the image display apparatus 100. In particular, power may be supplied to the controller 170, which may be implemented in the form of a system on chip (SOC), the display 180 for displaying images, and the audio output unit 185 for audio output.

Specifically, the power supply 190 may include a converter (not shown) that converts AC power to DC power and a DC/DC converter (not shown) that converts a level of DC power.

The remote controller 200 may transmit a user input to the user input interface 150. To this end, the remote controller 200 may use Bluetooth, radio frequency (RF) communication, infrared radiation (IR) communication, UWB, ZigBee, etc. In addition, the remote controller 200 may receive image, audio, or data signals output from the user input interface 150, and display them on the remote controller 200 or output voice.

Meanwhile, the aforementioned image display apparatus 100 may be a fixed or mobile digital broadcasting receiver capable of receiving digital broadcasting.

Meanwhile, the block diagram of the image display apparatus 100 shown in FIG. 2 is only a block diagram for an embodiment of the present disclosure, and each component of the block diagram may be combined, added, or omitted according to the specifications of the image display apparatus 100 that is actually implemented.

That is, as needed, two or more components may be combined into one component, or one component may be subdivided into two or more components. In addition, the functions performed by each block are for describing embodiments of the present disclosure, and the specific operations or devices do not limit the scope of the present disclosure.

FIG. 3 is an internal block diagram of the controller of FIG. 2.

Referring to FIG. 3, the controller 170 according to an embodiment of the present disclosure may include a demultiplexer 310, an image processor 320, a processor 330, an OSD generator 340, a mixer 345, a frame rate converter 350, and/or a formatter 360. In addition, the controller 170 may further include an audio processor (not shown) and a data processor (not shown).

The demultiplexer 310 may demultiplex an input stream. For example, when MPEG-2 TS is input, the demultiplexer 310 demultiplex the MPEG-2 TS to be separated into image, voice, and data signals. Here, the stream signal input to the demultiplexer 310 may be a stream signal output from the tuner 110, demodulator 120, or external device interface 130.

The image processor 320 may perform image processing of demultiplexed image signals. To this end, the image processor 320 may include an image decoder 325 and a scaler 335.

The image decoder 325 may decode the demultiplexed image signal, and the scaler 335 may perform scaling so that resolution of the decoded image signal may be output on the display 180.

The image decoder 325 may include decoders of various standards. For example, the image decoder 325 may include an MPEG-2, H.264 decoder, a 3D image decoder for a color image and depth image, and a decoder for multiple view images.

The processor 330 may control overall operations within the image display apparatus 100 or the controller 170. For example, the processor 330 may control the tuner 110 to select (tune) a broadcast corresponding to a channel selected by the user or a prestored channel.

In addition, the processor 330 may control the image display apparatus 100 by a user command input through the user input interface 150 or an internal program.

In addition, the processor 330 may perform data transmission control with the network interface 135 or the external device interface 130.

In addition, the processor 330 may control the operations of the demultiplexer 310, the image processor 320, and the OSD generator 340 within the controller 170.

The OSD generator 340 may generate an OSD signal according to user input or on its own. For example, the OSD generator 340 may generate a signal for displaying various information in graphics or text on the screen of the display 180.

The generated OSD signal may include various data, such as a user interface screen, various menu screens, widgets, and icons of the image display apparatus 100. In addition, the generated OSD signal may include 2D objects or 3D objects.

In addition, the OSD generator 340 may generate a pointer that may be displayed on the display 180 based on a pointing signal input from the remote controller 200.

The OSD generator 340 may include a pointing signal processor (not shown) that generates a pointer. It is also possible for the pointing signal processor (not shown) to be provided separately rather than within the OSD generator 240.

The mixer 345 may mix the OSD signal generated by the OSD generator 340 and the decoded image signal processed by the image processor 320. The mixed image signal may be provided to the frame rate converter 350.

The frame rate converter (FRC) 350 may convert a frame rate of an input image. Meanwhile, the frame rate converter 350 may also output the image as is without separate frame rate conversion.

The formatter 360 may arrange a left eye image frame and a right eye image frame of the frame rate converted 3D image. In addition, the formatter 360 may output a synchronization signal Vsync for opening the left eye glasses and the right eye glasses of a 3D viewing device (not shown).

Meanwhile, the formatter 360 may change a format of the input image signal into an image signal to be displayed on the display 180 and output the same.

In addition, the formatter 360 may change a format of the 3D image signal. For example, the formatter 360 may change the format of the 3D image signal into one of various 3D formats, such as side-by-side format, top/down format, frame sequential format, interlaced format, and checker box format..

Meanwhile, the formatter 360 may convert a 2D image signal into a 3D image signal. For example, according to a 3D image generating algorithm, an edge or an object selectable from a 2D image signal may be detected, and an object according to the detected edge or the selectable object may be separately generated as a 3D image signal. Here, the generated 3D image signal may be separated into a left eye image signal L and a right eye image signal R to be aligned, as described above.

Meanwhile, although not shown in the drawing, it is also possible to further dispose a 3D processor (not shown) for 3-dimensional effect signal processing after the formatter 360. The 3D processor may process brightness, tint, and color adjustment of the image signal to improve 3D effects. For example, signal processing may be performed to make a near region clear and a distant region blurry. Meanwhile, the functions of the 3D processor may be merged into the formatter 360 or within the image processor 320.

Meanwhile, the audio processor (not shown) in the controller 170 may perform audio processing of the demultiplexed audio signal. To this end, the audio processor (not shown) may include various decoders.

In addition, the audio processor (not shown) within the controller 170 may process bass, treble, and volume control.

The data processor (not shown) within the controller 170 may perform data processing of the demultiplexed data signal. For example, when the demultiplexed data signal is an encoded data signal, the data processor may decode the encoded data signal. The encoded data signal may be electronic program guide information including broadcast information, such as a start time and an end time of a broadcast program aired on each channel.

Meanwhile, the block diagram of the controller 170 shown in FIG. 3 is only a block diagram for an embodiment of the present disclosure, and each component of the block diagram may be integrated, added, or omitted according to the specifications of the controller 170 that is actually implemented.

In particular, the frame rate converter 350 and the formatter 360 may not be provided within the controller 170 but may be provided separately or as a single module.

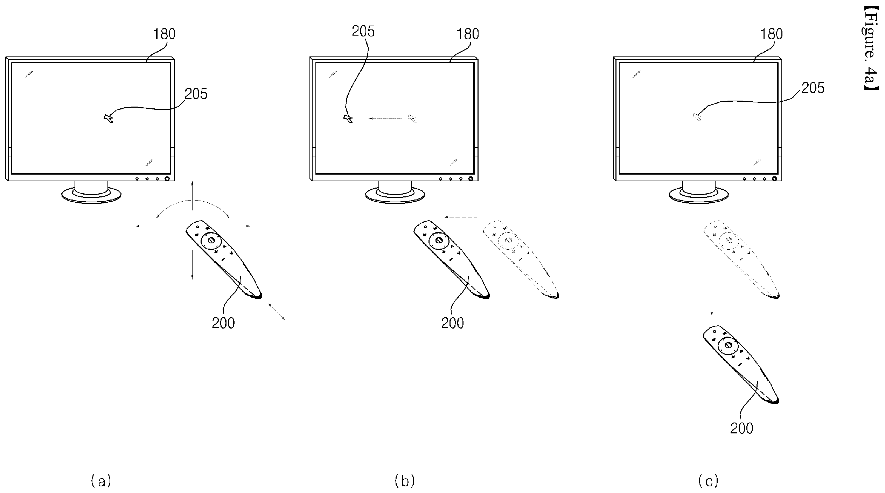

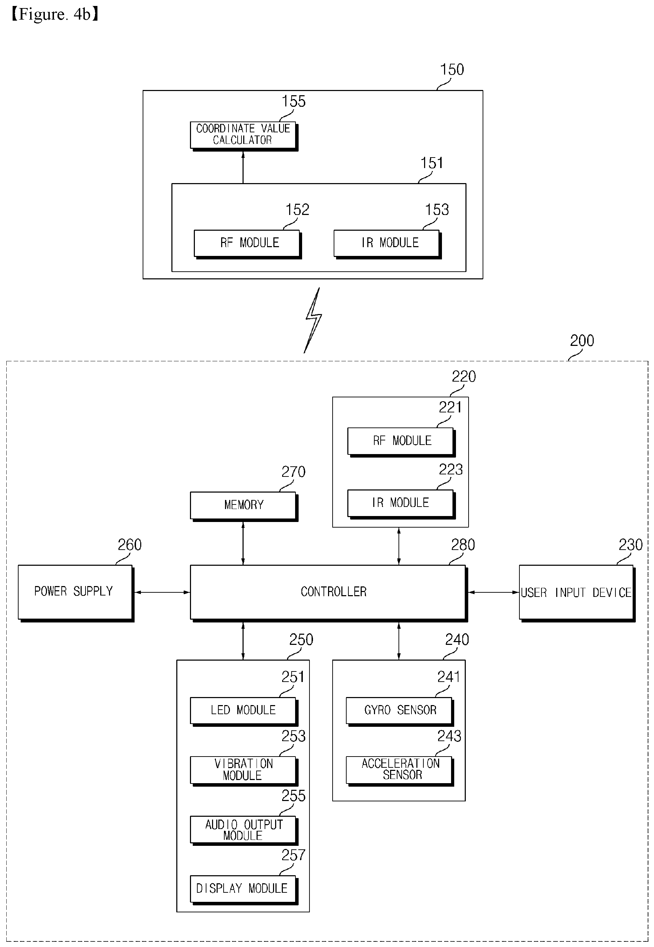

FIG. 4A is a diagram showing a method of controlling a remote controller of FIG. 2 and FIG. 4B is an internal block diagram of the remote controller of FIG. 2.

Referring to FIG. 4A, it is illustrated that a pointer 205 corresponding to the remote controller 200 is displayed on the display 180 of the image display apparatus 100.

As shown in FIG. 4A(a), the user can move or rotate the remote control device 200 up and down, left and right, back and forth. The movement of the pointer 205 displayed on the display 180 of the image display apparatus may correspond to the movement of the remote control device 200. As shown in the drawing, the remote control device 200 may allow a corresponding pointer 205 to move and be displayed according to movement in a 3D space, and thus may be referred to as a space remote controller or a 3D pointing device.

FIG. 4A(b) illustrates that when a user moves the remote control device 200 to the left, the pointer 205 displayed on the display 180 of the image display apparatus 100 also moves to the left in response thereto.

Information on the movement of the remote control device 200 detected through a sensor of the remote control device 200 may be transmitted to the image display apparatus 100. The image display apparatus 100 may calculate the coordinate of the pointer 205 from information related to the movement of the remote control device 200. The image display apparatus 100 may display a pointer 205 to correspond to the calculated coordinates.

FIG. 4A(c) illustrates a case where the user moves the remote controller 200 away from the display 180, while pressing a specific button of the remote controller 200. Thus, a selection area within the display 180 corresponding to the pointer 205 may be zoomed in so that it may be displayed to be enlarged. Meanwhile, when the user moves the remote controller 200 close to the display 180, the selection area within the display 180 corresponding to the pointer 205 may be zoomed out so that it may be displayed to be reduced.

Meanwhile, when the remote controller 200 moves away from the display 180, the selection area may be zoomed out, and when the remote controller 200 approaches the display 180, the selection area may be zoomed in.

Meanwhile, when the specific button of the remote controller 200 is pressed, it is possible to exclude the recognition of vertical and lateral movement. That is, when the remote controller 200 moves away from or approaches the display 180, the up, down, left, and right movements are not recognized, and only the forward and backward movements are recognized. Only the pointer 205 is moved according to the up, down, left, and right movements of the remote controller 200 in a state where the specific button of the remote controller 200 is not pressed.

Meanwhile, the moving speed or the moving direction of the pointer 205 may correspond to the moving speed or the moving direction of the remote controller 200.

Referring to the figure, the remote controller 200 includes a wireless transceiver 220, a user input device 230, a sensor device 240, an output device 250, a power supply 260, a memory 270, and a controller 280.

The wireless transceiver 220 transmits/receives a signal to/from the image display apparatus 100.

In the present embodiment, the remote controller 200 may include an RF module 221 for transmitting and receiving signals to and from the image display apparatus 100 according to a RF communication standard. In addition, the remote controller 200 may include an IR module 223 for transmitting and receiving signals to and from the image display apparatus 100 according to a IR communication standard.

The remote controller 200 may transmit a signal containing information on the motion of the remote controller 200 to the image display apparatus 100 through the RF module 221. The remote controller 200 may receive the signal transmitted by the image display apparatus 100 through the RF module 221.

The remote controller 200 may transmit a command related to power on/off, channel change, volume change, and the like to the image display apparatus 100 through the IR module 223.

The user input device 230 may be implemented by a keypad, a button, a touch pad, a touch screen, or the like. The user may operate the user input device 230 to input a command related to the image display apparatus 100 to the remote controller 200.

When the user input device 230 includes a hard key button, the user may input a command related to the image display apparatus 100 to the remote controller 200 through a push operation of the hard key button.

When the user input device 230 includes a touch screen, the user may touch a soft key of the touch screen to input the command related to the image display apparatus 100 to the remote controller 200.

Meanwhile, the user input device 230 may include various types of input means, such as a scroll key, a jog key, etc., which may be operated by the user, and the present disclosure does not limit the scope of the present disclosure.

The user input device 230 may include a microphone. The user may utter a voice toward the microphone provided in the user input device 230. At this time, the microphone provided in the user input device 230 may receive the voice uttered by the user.

The sensor device 240 may include a gyro sensor 241 or an acceleration sensor 243. The gyro sensor 241 may sense information regarding the motion of the remote controller 200.

The gyro sensor 241 may sense information on the operation of the remote controller 200 based on the x, y, and z axes. The acceleration sensor 243 may sense information on the moving speed of the remote controller 200. Meanwhile, the sensor device 240 may further include a distance measuring sensor sensing the distance to the display 180.

The output device 250 may output an image or an audio signal corresponding to the operation of the user input device 230 or a signal transmitted from the image display apparatus 100. Through the output device 250, the user may recognize whether the user input device 230 is operated or whether the image display apparatus 100 is controlled.

The output device 250 may include an LED module 251 including at least one light emitting device (e.g., a light emitting diode (LED)), a vibration module 253 for generating a vibration, an audio output module 255 for outputting an audio, and/or a display module 257 for outputting an image.

The power supply 260 supplies power to the remote controller 200. The power supply 260 may include at least one battery (not shown).

When movement of the remote controller 200 is not detected through the sensor device 240 for a predetermined period of time, the power supply 260 may stop supplying power to each component included in the remote controller 200 thereby preventing unnecessary power consumption.

The power supply 260 may resume supplying power to each component included in the remote controller 200 when a predetermined event occurs. For example, the power supply 260 may resume supplying power to each component when a predetermined key provided in the remote controller 200 is manipulated. For example, the power supply 260 may resume supplying power to each component included in the remote controller 200 when movement of the remote controller 200 is detected through the sensor device 240.

The memory 270 may store various types of programs, application data, and the like necessary for the control or operation of the remote controller 200.

If the remote controller 200 wirelessly transmits and receives a signal to/from the image display apparatus 100 through the RF module 221, the remote controller 200 and the image display apparatus 100 transmit and receive a signal through a certain frequency band. The controller 280 of the remote controller 200 may store information regarding a frequency band or the like for wirelessly transmitting and receiving a signal to/from the image display apparatus 100 paired with the remote controller 200 in the memory 270 and may refer to the stored information.

The controller 280 may include at least one processor, and may control the overall operation of the remote controller 200 using the processor included therein.

The controller 280 may transmit a signal corresponding to a certain key operation of the user input device 230 or a signal corresponding to the motion of the remote controller 200 sensed by the sensor device 240 to the image display apparatus 100 through the wireless transceiver 220.

The user input interface 150 of the image display apparatus 100 includes a wireless transceiver 151 that may wirelessly transmit and receive a signal to and from the remote controller 200 and a coordinate value calculator 155 that may calculate the coordinate value of a pointer corresponding to the operation of the remote controller 200.

The user input interface 150 may wirelessly transmit and receive a signal to and from the remote controller 200 through the RF module 152. In addition, the user input interface 150 may receive a signal transmitted by the remote controller 200 through the IR module 153 according to a IR communication standard.

The coordinate value calculator 155 may correct a hand shake or an error from a signal corresponding to the operation of the remote controller 200 received through the wireless transceiver 151 and calculate the coordinate value (x, y) of the pointer 205 to be displayed on the display 170.

The transmission signal of the remote controller 200 inputted to the image display apparatus 100 through the user input interface 150 is transmitted to the controller 170 of the image display apparatus 100. The controller 170 may determine the information on the operation of the remote controller 200 and the key operation from the signal transmitted from the remote controller 200, and, correspondingly, control the image display apparatus 100.

For another example, the remote controller 200 may calculate the pointer coordinate value corresponding to the operation and output it to the user input interface 150 of the image display apparatus 100. In this case, the user input interface 150 of the image display apparatus 100 may transmit information on the received pointer coordinate value to the controller 170 without a separate correction process of hand shake or error.

For another example, unlike the figure, the coordinate value calculator 155 may be provided in the signal processing device 170, not in the user input interface 150.

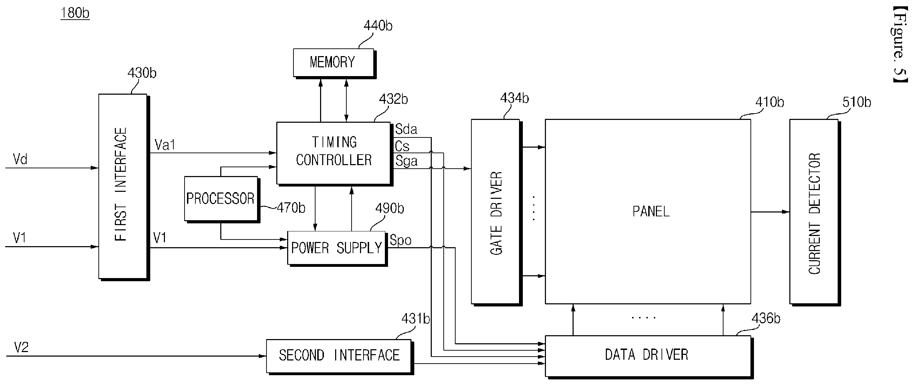

FIG. 5 is an internal block diagram of a display of FIG. 2.

Referring to FIG. 5, the display 180b based on an organic light emitting panel may include an organic light emitting panel 410b, a first interface 430b, a second interface 431b, a timing controller 432b, a gate driver 434b, a data driver 436b, a memory 440b, a processor 470b, a power supply 490b, a current detector 510b, and the like.

The display 180b receives an image signal Vd, a first DC voltage V1, and a second DC voltage V2, and may display a certain image based on the image signal Vd.

Meanwhile, the first interface 430b in the display 180b may receive the image signal Vd and the first DC voltage V1 from the signal processing device 170.

Here, the first DC voltage V1 may be used for the operation of the power supply 490b and the timing controller 432b in the display 180b.

Next, the second interface 431b may receive a second DC voltage V2 from an external power supply 190. Meanwhile, the second DC voltage V2 may be input to the data driver 436b in the display 180b.

The timing controller 432b may output a data driving signal Sda and a gate driving signal Sga, based on the image signal Vd.

For example, when the first interface 430b converts the input image signal Vd and outputs the converted image signal val, the timing controller 432b may output the data driving signal Sda and the gate driving signal Sga based on the converted image signal val.

The timing controller 432b may further receive a control signal, a vertical synchronization signal Vsync, and the like, in addition to the image signal Vd from the signal processing device 170.

In addition to the image signal Vd, based on a control signal, a vertical synchronization signal Vsync, and the like, the timing controller 432b generates a gate driving signal Sga for the operation of the gate driver 434b, and outputs a data driving signal Sda for the operation of the data driver 436b.

At this time, when the panel 410b includes a RGBW subpixel, the data driving signal Sda may be a data driving signal for driving of RGBW subpixel.

Meanwhile, the timing controller 432b may further output a control signal Cs to the gate driver 434b.

The gate driver 434b and the data driver 436b supply a scan signal and an image signal to the panel 410b through a gate line GL and a data line DL respectively, according to the gate driving signal Sga and the data driving signal Sda from the timing controller 432b. Accordingly, the panel 410b displays a certain image.

Meanwhile, the organic light emitting panel 410b may include an organic light emitting layer. In order to display an image, a plurality of gate lines GL and data lines DL may be disposed in a matrix form in each pixel corresponding to the organic light emitting layer.

Meanwhile, the data driver 436b may output a data signal to the organic light emitting panel 410b based on a second DC voltage V2 from the second interface 431b.

The power supply 490b may supply various power supplies to the gate driver 434b, the data driver 436b, the timing controller 432b, and the like.

The current detector 510b may detect the current flowing in a sub-pixel of the organic light emitting panel 410b. The detected current may be input to the processor 470b or the like, for a cumulative current calculation.

The processor 470b may perform each type of control of the display 180b. For example, the processor 470b may control the gate driver 434b, the data driver 436b, the timing controller 432b, and the like.

Meanwhile, the processor 470b may receive current information flowing in a sub-pixel of the organic light emitting panel 410b from the current detector 510b.

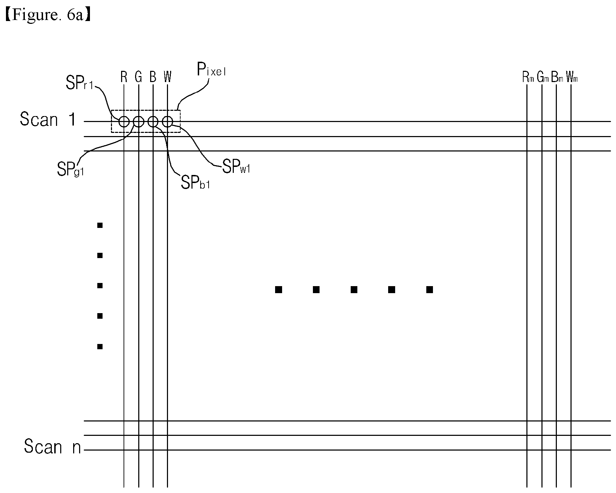

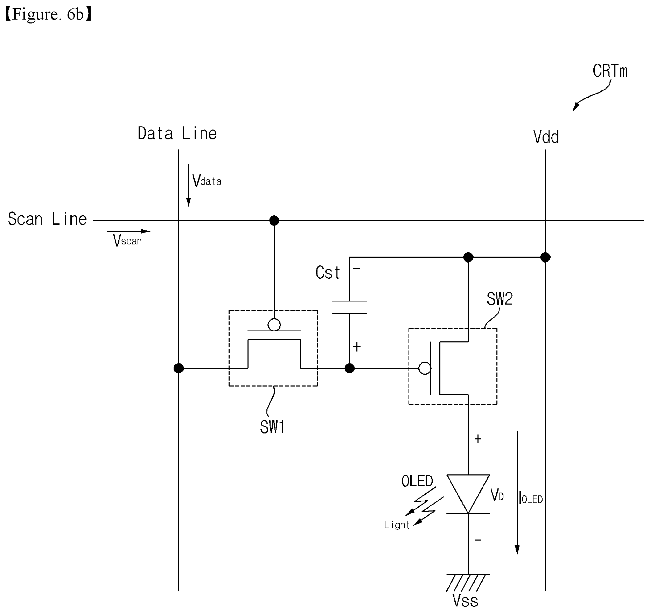

FIG. 6A and FIG. 6B are diagrams referred to in the description of an organic light emitting panel of FIG. 5.

Firstly, FIG. 6A is a diagram illustrating a pixel in the organic light emitting panel 410b.

Referring to FIG. 6A, the organic light emitting panel 410b may include a plurality of scan lines Scan1 to Scann and a plurality of data lines R1, G1, B1, W1 to Rm, Gm, Bm, Wm intersecting the scan lines.

Meanwhile, a pixel (subpixel) is defined in an intersecting area of the scan line and the data line in the organic light emitting panel 410b. In the figure, a pixel including sub-pixels SR1, SG1, SB1 and SW1 of RGBW is shown.

FIG. 6B illustrates a circuit of any one sub-pixel in the pixel of the panel of FIG. 6A.

Referring to FIG. 6B, a sub pixel circuit (CRTm) may include, as an active type, a scan switching element SW1, a storage capacitor Cst, a drive switching element SW2, and an organic light emitting layer (OLED).

The scan switching element SW1 is turned on according to the input scan signal Vdscan, as a scan line is connected to a gate terminal. When it is turned on, the input data signal Vdata is transferred to the gate terminal of a drive switching element SW2 or one end of the storage capacitor Cst.

The storage capacitor Cst is formed between the gate terminal and the source terminal of the drive switching element SW2, and stores a certain difference between a data signal level transmitted to one end of the storage capacitor Cst and a DC voltage (VDD) level transmitted to the other terminal of the storage capacitor Cst.

For example, when the data signal has a different level according to a Plume Amplitude Modulation (PAM) method, the power level stored in the storage capacitor Cst varies according to the level difference of the data signal Vdata.

For another example, when the data signal has a different pulse width according to a pulse width modulation (PWM) method, the power level stored in the storage capacitor Cst varies according to the pulse width difference of the data signal Vdata.

The drive switching element SW2 is turned on according to the power level stored in the storage capacitor Cst. When the drive switching element SW2 is turned on, the driving current (IOLED), which is proportional to the stored power level, flows in the organic light emitting layer (OLED). Accordingly, the organic light emitting layer OLED performs a light emitting operation.

The organic light emitting layer OLED may include a light emitting layer (EML) of RGBW corresponding to a subpixel, and may include at least one of a hole injecting layer (HIL), a hole transporting layer (HTL), an electron transporting layer (ETL), and an electron injecting layer (EIL). In addition, it may include a hole blocking layer, and the like.

Meanwhile, the subpixels emit a white light in the organic light emitting layer OLED. However, in the case of green, red, and blue subpixels, a subpixel is provided with a separate color filter for color implementation. That is, in the case of green, red, and blue subpixels, each of the subpixels further includes green, red, and blue color filters. Meanwhile, since a white subpixel outputs a white light, a separate color filter is not required.

Meanwhile, in the figure, it is illustrated that a p-type MOSFET is used for a scan switching element SW1 and a drive switching element SW2, but an n-type MOSFET or other switching element, such as a JFET, IGBT, SIC, or the like are also available.

Meanwhile, the pixel is a hold-type element that continuously emits light in the organic light emitting layer (OLED), after a scan signal is applied, during a unit display period, specifically, during a unit frame.

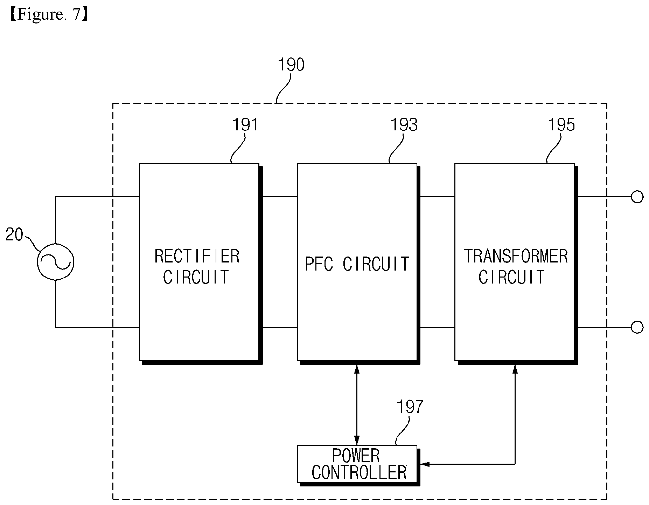

FIG. 7 is an internal block diagram of the power supply unit of FIG. 2.

Referring to FIG. 7, the power supply 190 may include a rectifier circuit 191, a Power Factor Correction (PFC) circuit 193, a transformer circuit 195, and/or a power controller 197.

The rectifier circuit 191 may convert input AC power into DC power and output the converted power. The rectifier circuit 191 includes diodes and the like and is configured to perform a rectification operation. For example, if AC power 20 is single-phase AC power, the rectifier circuit 191 may include four diodes in a bridge form, and if the AC power 20 is three-phase AC power, the rectifier circuit 191 may include six diodes in a bridge form.

The PFC circuit 193 may correct a power factor of the rectified power and output the corrected power. For example, the PFC circuit 193 may match the voltage and current of the rectified power to the same phase.

The PFC circuit 193 may be a boost topology. For example, the PFC circuit 193 may be implemented as a single-phase PFC circuit including one boost converter. For example, the PFC circuit 193 may be implemented as an interleaved PFC circuit including two boost converters.

The transformer circuit 195 may transform the power output from the PFC circuit 193. For example, the transformer circuit 195 may output a voltage of 24V output from the PFC circuit 193 with no change. For example, the transformer circuit 195 may lower the voltage output from the PFC circuit 193 from 24V to 18V. In this case, the transformer circuit 195 may gradually lower the voltage output from the PFC circuit 193. Hereinafter, the voltage output from the transformer circuit 195 may be referred to as an output voltage, and the current output from the transformer circuit 195 may be referred to as an output current.

The transformer circuit 195 may include an LLC resonant converter. For example, the transformer circuit 195 may be implemented in the form of a full-bridge converter.

The power controller 197 may control the operation of each component included in the power supply 190. For example, the power controller 197 may control a switching operation of a switching element of the boost converter included in the PFC circuit 193. For example, the power controller 197 may control the switching operation of a plurality of switching elements of the LLC resonant converter included in the transformer circuit 195.

The power controller 197 may be included in the controller 170 or may be provided as a separate component distinct from the controller 170. For example, the power controller 197 may be mounted on a power board corresponding to the power supply 190, and the processor 330 of the controller 170 may be mounted on a main board. In this case, the power controller 197 and the processor 330 may transmit and receive data with each other using a predetermined communication scheme. For example, the power controller 197 and the processor 330 may transmit and receive data with each other using Universal asynchronous receiver/transmitter (UART) communication.

The power controller 197 may output a control signal to each component included in the power supply 190. For example, the power controller 197 may output a control signal to the switching element of the boost converter included in the PFC circuit 193 based on a target value for the driving power transmitted from the processor 330. For example, the power controller 197 may output a control signal to the plurality of switching elements of the LLC resonant converter included in the transformer circuit 195 based on a magnitude of the load transmitted from the processor 330. For example, the power controller 197 may output a control signal to the plurality of switching elements of the LLC resonant converter included in the transformer circuit 195 based on the magnitude of the output voltage transmitted from the processor 330.

According to an embodiment, the power controller 197 mounted on the power board may receive a signal having a voltage value corresponding to the magnitude of the output voltage from the processor 330 mounted on the main board. For example, the magnitude of the output voltage may be 18V if the signal transmitted to the power controller 197 is 0V to 0.6V, the magnitude of the output voltage may be 19V if a voltage value of the signal is 0.6V to 0.9V, the magnitude of the output voltage may be 20V if a voltage value of the signal is 0.9V to 1.2V, and the magnitude of the output voltage may be 24V if a voltage value of the signal is 2.1V to 2.4V.

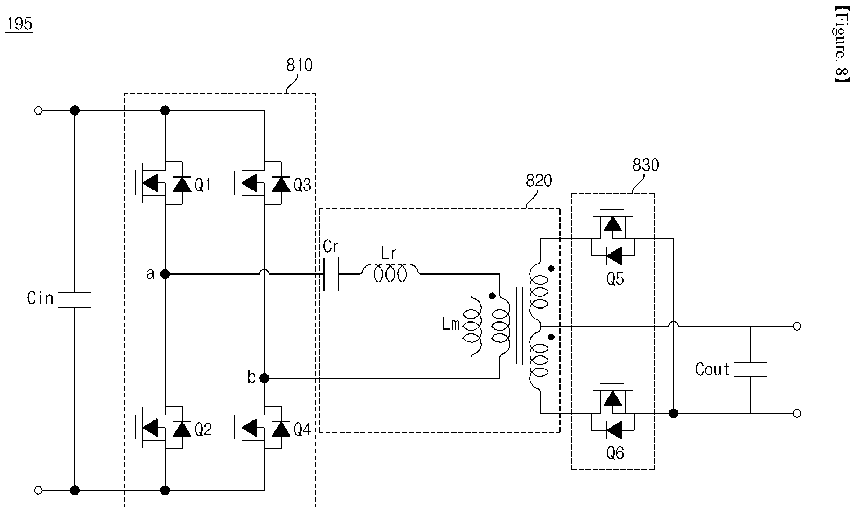

FIG. 8 is an internal circuit diagram of the transformer circuit of FIG. 7.

Referring to FIG. 8, the transformer circuit 195 may include a first switching unit 810, a transformer 820, a second switching unit 930, an input capacitor Cin electrically connected to an input terminal, an output capacitor Cout electrically connected to an output terminal, etc.

The first switching unit 810 may include a plurality of switching elements Q1, Q2, Q3, and Q4. Among the plurality of switching elements Q1, Q2, Q3, and Q4, two pairs of upper and lower arm switching elements are connected to each other in parallel, each pair including an upper arm switching element and a lower arm switching element which are connected in series. The first switching unit 810 may include four switching elements connected in a full bridge configuration and diodes connected to the respective switching elements. The plurality of switching elements Q1, Q2, Q3, and Q4 included in the first switching unit 810 may be switched alternately and complementarily according to the switching frequency. In this case, a voltage of a high-frequency pulse may be applied to the transformer 820 according to the switching operation of the plurality of switching elements Q1, Q2, Q3, and Q4.

The power controller 197 may output a control signal to the plurality of switching elements Q1, Q2, Q3, and Q4 based on a pulse width modulation (PWM) method, a pulse frequency modulation (PFM) method, a phase shift method, etc. In this case, the power controller 195 may control the switching operation of the plurality of switching elements Q1, Q2, Q3, and Q4 by adjusting a duty cycle, a switching frequency, a phase angle, and the like of the control signal.

The transformer 820 may include a resonant capacitor Cr, a resonant inductor Lr, and a magnetic inductor Lm. The resonant capacitor Cr and the resonant inductor Lr of the transformer 820 may control a primary side voltage of the magnetic inductor Lm using an LC resonance, by causing a pulse voltage generated by the first switching unit 810 to pass.

The transformer 820 may convert the primary side voltage into a secondary side voltage according to a winding ratio and transmit the resultant voltage to the second switching unit 830. That is, the transformer 820 may convert the input voltage into a voltage value of a required predetermined level.

The second switching unit 830 may output the secondary side voltage of the transformer 820 as a DC voltage according to the switching operation of switching elements Q5 and Q6. The plurality of switching elements Q5 and Q6 included in the second switching unit 830 may be switched alternately and complementarily.

In the present disclosure, a synchronous rectifier type series resonant converter is described as an example in which the second switching unit 830, including a reverse conductive Metal-Oxide Semiconductor Field Effect Transistor (MOSFET) instead of a general diode rectifier, is connected to the transformer 820. By using the second switching unit 830 as a rectifier, the conduction loss may be effectively reduced compared to the case of using the general diode rectifier.

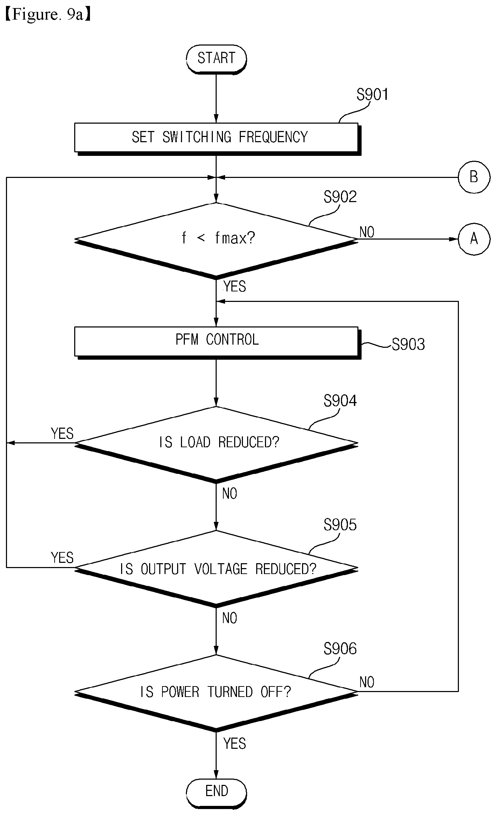

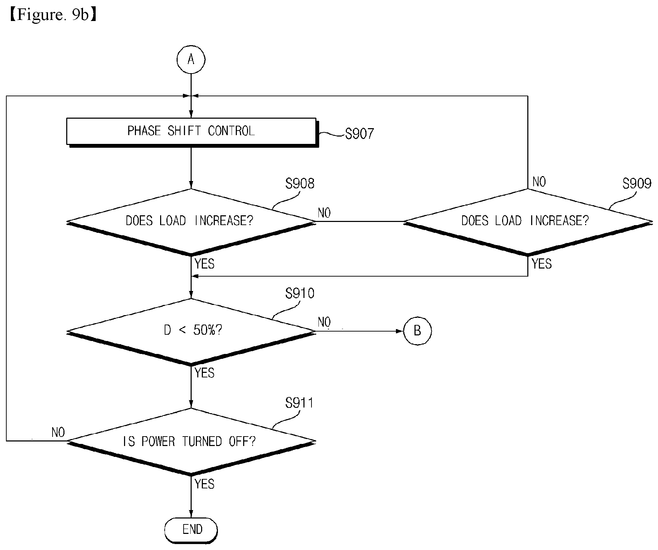

FIGS. 9A and 9B are flowcharts illustrating a method of operating an image display apparatus according to an embodiment of the present disclosure.

Referring to FIG. 9A, the image display apparatus 100 may set a switching frequency for the operation of the transformer circuit 195 in operation S901. For example, the image display apparatus 100 may calculate a switching frequency corresponding to the PFM method based on a load corresponding to luminance of an image output through the display 180, a mode for the brightness of a screen (hereinafter referred to as a screen mode), etc. In this case, a duty cycle of the pulse corresponding to the PFM method may be set to a predetermined duty cycle (e.g., 50%). Here, the image display apparatus 100 may continuously calculate the switching frequency corresponding to the PFM method while the screen is output through the display 180.

The image display apparatus 100 may determine whether the switching frequency is less than a predetermined maximum frequency fmax in operation S902. Here, the maximum frequency may be a frequency set in relation to regulations on conducted emissions (CE). For example, the image display apparatus 100 may determine whether the switching frequency corresponding to the PFM method is 150 kHz or higher which is predetermined as the maximum frequency.

If the switching frequency is less than the predetermined maximum frequency fmax, the image display apparatus 100 may control the operation of the transformer circuit 195 according to the PFM method in operation S903. For example, if a load increases in response to an increase in luminance of the image output through the display 180, the image display apparatus 100 may reduce the switching frequency in response to the load increase. For example, if a user increases a brightness level of the screen, the image display apparatus 100 may reduce the switching frequency so that a set value for the output voltage increases in response to the increase in the brightness level of the screen. For example, if a screen mode changes from a first mode that outputs the screen in a bright state to a second mode that outputs the screen in a dark state, the image display apparatus 100 may increase the switching frequency in response to the decrease in the brightness of the screen. The following description will be given of an example in which a set value for the output voltage corresponding to the first mode is 24V, a set value for the output voltage corresponding to the second mode is 21V, and a set value for the output voltage corresponding to the third mode is 18V.

The image display apparatus 100 may determine whether the load is reduced in operation S904. For example, if the luminance of the image output through the display 180 is reduced, the load of the image display apparatus 100 may be reduced.

The image display apparatus 100 may determine whether the set value for the output voltage is reduced in operation S905. For example, if the screen mode changes to the second mode or the third mode while the screen mode of the image display apparatus 100 is set to the first mode, the set value for the output voltage may be reduced.

The image display apparatus 100 may determine whether power is turned off in operation S906. The image display apparatus 100 may control the operation of the transformer circuit 195 according to the PFM method until the power is turned off, while the switching frequency is less than the predetermined maximum frequency fmax.

In addition, the image display apparatus 100 may monitor whether the switching frequency is greater than or equal to the predetermined maximum frequency fmax in the case where the load is reduced and/or the set value for the output voltage is reduced.

Referring to FIG. 9B, in the case where the switching frequency is greater than or equal to the predetermined maximum frequency fmax, the image display apparatus 100 may control the operation of the transformer circuit 195 according to the phase shift method in operation S907. In this case, the switching frequency corresponding to the phase shift method may be set to a predetermined frequency. Here, the predetermined frequency may be less than or equal to the predetermined maximum frequency fmax. For example, the predetermined frequency may be a maximum value (e.g., 150 kHz) among frequencies that satisfy the requirements regarding conducted emissions (CE).

If the operation of the transformer circuit 195 is controlled according to the phase shift method, states may be repeated periodically, including a state in which an upper arm switching element of one of the two pairs of switching elements included in the first switching unit 810 of the transformer circuit 195 is turned on, a lower arm switching element of the other one thereof is turned on, and the rest are turned off (hereinafter referred to as a first state); and a state in which all the upper arm switching elements included in the first switching unit 810 are turned on and all the lower arm switching elements are turned off, or all the upper arm switching elements are turned off and all the lower arm switching elements are turned on (hereinafter referred to as a second state). In this case, the first state and the second state may be repeated twice in one period. Here, a duty cycle of the pulse for each of the plurality of switching elements Q1, Q2, Q3, and Q4 included in the first switching unit 810 may be 50%.

The image display apparatus 100 may determine a time during which the first state is maintained in one period (hereinafter referred to as a PS time). The image display apparatus 100 may adjust the PS time by changing (or shifting) the phase of the pulse for the plurality of switching elements Q1, Q2, Q3, and Q4. The image display apparatus 100 may determine a phase angle corresponding to a degree to which the phase of the pulse transmitted to the switching elements Q1, Q2, Q3, and Q4 is changed (shifted). In this case, the image display apparatus 100 may adjust the PS time based on the phase angle. That is, the PS time may correspond to the phase angle. Here, the PS time may correspond to a duty value obtained by summing the effective duty and the duty loss. In this disclosure, an example will be illustrated in which the duty loss is zero.

The image display apparatus 100 may determine the PS time (D) based on the load, screen mode, etc., corresponding to the luminance of the image output through the display 180. For example, if the load increases in response to the increase in the luminance of the image output through the display 180, the image display apparatus 100 may increase the PS time (D) in response to the load increase. For example, if a user decreases the brightness level of the screen, the image display apparatus 100 may reduce the PS time (D) so that the set value for the output voltage decreases in response to the decrease in the brightness level of the screen. For example, if the screen mode changes from the second mode to the third mode, the image display apparatus 100 may reduce the PS time (D) in response to the decrease in the brightness of the screen.

The image display apparatus 100 may determine whether the load increases in operation S908. For example, if the luminance of the image output through the display 180 increases, the load of the image display apparatus 100 may increase.

The image display apparatus 100 may determine whether the set value for the output voltage increases in operation S909. For example, if the screen mode changes to the first mode or the second mode while the screen mode of the image display apparatus 100 is set to the third mode, the set value for the output voltage may increase.

The image display apparatus 100 may determine whether a ratio of the PS time (D) to the period corresponding to a predetermined frequency is less than a predetermined ratio in operation S910, in the case where the load increases and/or the set value for the output voltage increases. Here, the predetermined ratio may be 50% or less. In this disclosure, an example will be described in which the predetermined ratio is 50%.

The image display apparatus 100 may determine whether the power is turned off in operation S906. The image display apparatus 100 may control the operation of the transformer circuit 195 according to the phase shift method until the power is turned off while the PS time (D) is less than 50% of one period.

In addition, if the PS time (D) corresponds to 50% of one period, the image display apparatus 100 may determine whether the switching frequency corresponding to the PFM method is less than the predetermined maximum frequency fmax. In this case, if the switching frequency is less than the predetermined maximum frequency fmax based on the increase in the load and/or the increase in the set value for the output voltage, the image display apparatus 100 may control the operation of the transformer circuit 195 according to the PFM method.

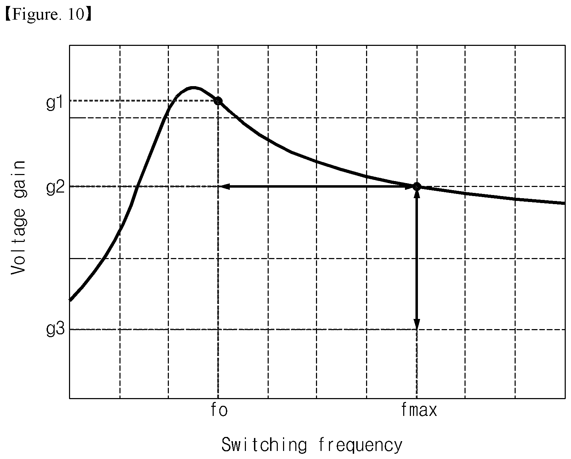

Referring to FIG. 10, if the switching frequency corresponding to the PFM method is less than the predetermined maximum frequency fmax, the image display apparatus 100 according to embodiments of the present disclosure may control the operation of the transformer circuit 195 according to the PFM method. In this case, the duty cycle of the pulse corresponding to the PFM method is fixed at a predetermined duty cycle (e.g., 50%), and the switching frequency may be adjusted. For example, the switching frequency may be adjusted between a minimum frequency fo and the maximum frequency fmax, which is a frequency range according to the PFM method.

In addition, if the switching frequency corresponding to the PFM method is greater than or equal to the predetermined maximum frequency fmax, the image display apparatus 100 may control the operation of the transformer circuit 195 according to the phase shift method. In this case, the switching frequency corresponding to the phase shift method is fixed at a predetermined frequency (e.g., 150 kHz), and the PS time (D) may be adjusted. In addition, as the PS time (D) is changed while the switching frequency is fixed at the maximum frequency fmax, the voltage gain may be adjusted.

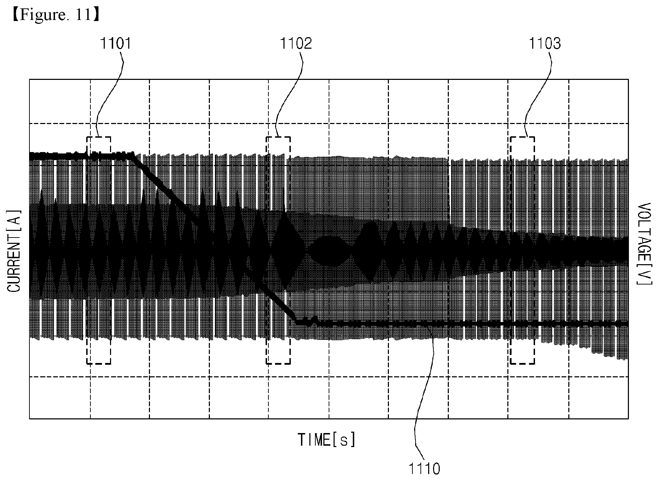

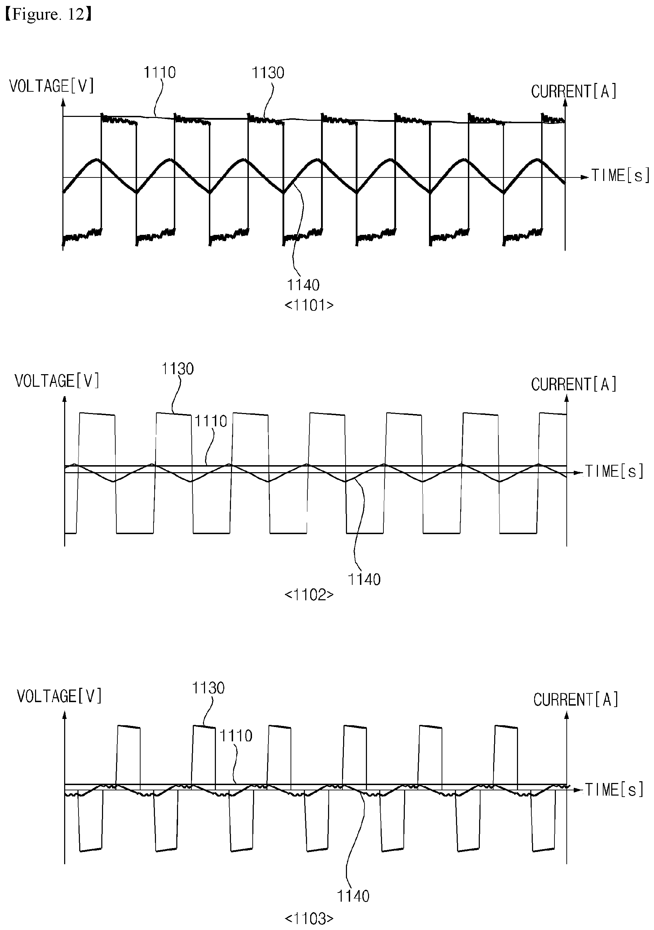

Referring to FIGS. 11 and 12, while the screen mode is set to a predetermined mode, the method of controlling the operation of the transformer circuit 195 may be changed in response to a decrease in the load of the image display apparatus 100. In this case, while the screen mode is set to the predetermined mode, the set value for the output voltage may be maintained.

The image display apparatus 100 may control the operation of the transformer circuit 195 so that an output current 1110 decreases in response to the decrease in the load. In this case, if the switching frequency corresponding to the PFM method increases above the maximum frequency fmax in response to the decrease in the load, the image display apparatus 100 may change the method of controlling the operation of the transformer circuit 195 from the PFM method to the phase shift method.

In a period 1101 where the load of the image display apparatus 100 is greater than or equal to a predetermined level, the image display apparatus 100 may control the operation of the transformer circuit 195 according to the PFM method. In this case, as the operation of the transformer circuit 195 is controlled based on the switching frequency corresponding to the load, a primary side voltage 1130 may appear as a high-frequency pulse corresponding to the switching frequency and having a duty cycle of 50%. In addition, a primary side current 1140 may appear as a sinusoidal wave corresponding to the primary side voltage 1130.

In a transient period 1102 where the method of controlling the operation of the transformer circuit 195 changes from the PFM method to the phase shift method, the image display apparatus 100 may control the operation of the transformer circuit 195 according to the phase shift method. In this case, the switching frequency may be fixed at a predetermined frequency (e.g., 150 kHz). Here, in the transient period 1102, the PS time (D) may be gradually reduced from less than 50% of one period to correspond to the load of the image display apparatus 100.

In addition, in a period 1103 where the load of the image display apparatus 100 is less than the predetermined level, the image display apparatus 100 may control the operation of the transformer circuit 195 according to the phase shift method. In this case, as the phase of the pulse for the plurality of switching elements Q1, Q2, Q3, and Q4 is changed (shifted) based on the phase angle corresponding to the load, the primary side voltage 1130 may appear as a pulse including a zero-voltage period.

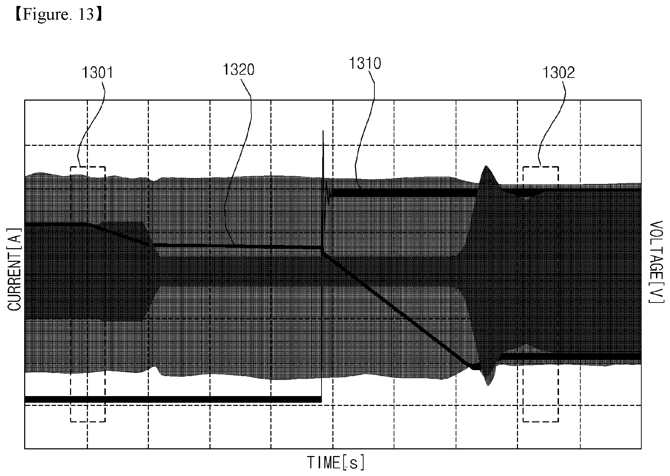

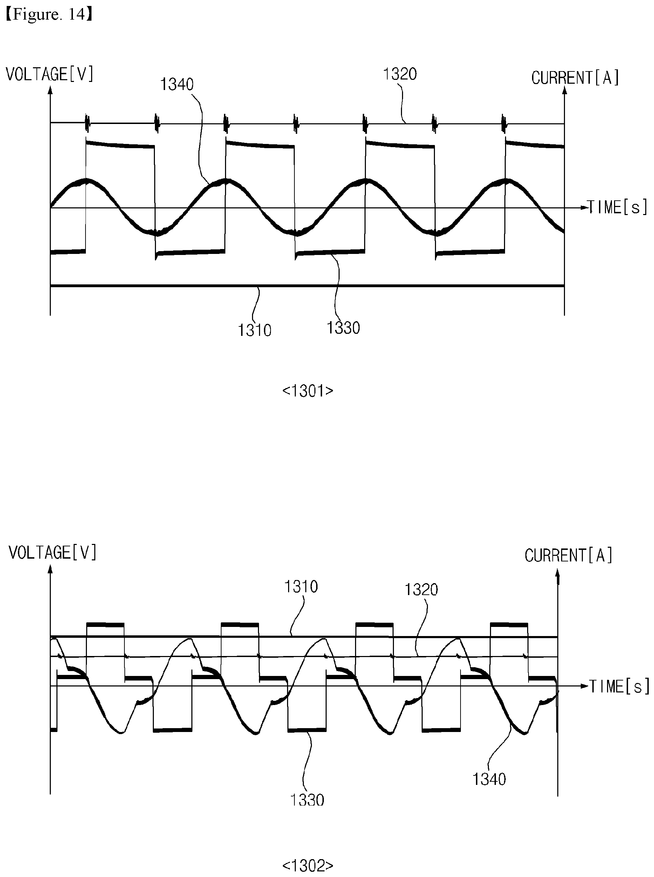

Referring to FIGS. 13 and 14, when an image with predetermined luminance is output through the display 180, the method of controlling the operation of the transformer circuit 195 may be changed as the screen mode is changed or the brightness level of the screen is reduced by the user.

The image display apparatus 100 may control the operation of the transformer circuit 195 so that an output voltage 1320 decreases in response to a decrease in the brightness level of the screen. In this case, the image display apparatus 100 may change the method of controlling the operation of the transformer circuit 195 from the PFM method to the phase shift method if the switching frequency corresponding to the PFM method increases above the maximum frequency fmax in response to the decrease in the brightness level of the screen.

In a period 1301 where the screen mode of the image display apparatus 100 is set to the second mode, the image display apparatus 100 may control the operation of the transformer circuit 195 according to the PFM method. In this case, as the operation of the transformer circuit 195 is controlled based on the switching frequency corresponding to the brightness level of the screen, a primary side voltage 1330 may appear as a high-frequency pulse corresponding to the switching frequency and having a duty cycle of 50%. In addition, a primary side current 1340 may appear as a sinusoidal wave corresponding to the primary side voltage 1330.

Further, in a period 1302 where the screen mode of the image display apparatus 100 is set to the third mode, the image display apparatus 100 may control the operation of the transformer circuit 195 according to the phase shift method. In this case, as the phase of the pulse for the plurality of switching elements Q1, Q2, Q3, and Q4 is changed (shifted) based on the phase angle corresponding to the load, the primary side voltage 1330 may appear as a pulse including a zero-voltage period.

Meanwhile, even though the output current 1310 corresponding to the load is greater in the period 1302, in which the screen mode of the image display apparatus 100 is set to the third mode, than in the period 1301 in which the screen mode of the image display apparatus 100 is set to the second mode, if the switching frequency corresponding to the PFM method increases above the maximum frequency fmax in response to the decrease in the brightness level of the screen, the operation of the transformer circuit 195 may be controlled according to the phase shift method.

In the following description, directions are defined based on the orthogonal coordinate system. In the orthogonal coordinate system, the x-axis direction may be defined as the left-right direction. In this case, with respect to an original point, the direction toward +x may be defined as the right direction and the direction toward -x may be defined as the left direction. In addition, the y-axis direction may be defined as the front-rear direction. In this case, with respect to an original point, the direction toward +y may be defined as the forward direction and the direction toward -y may be defined as the backward direction. In addition, the z-axis direction may be defined as the up-down direction. In this case, with respect to an original point, the direction toward +z may be defined as the upward direction and the direction toward -z may be defined as the downward direction.

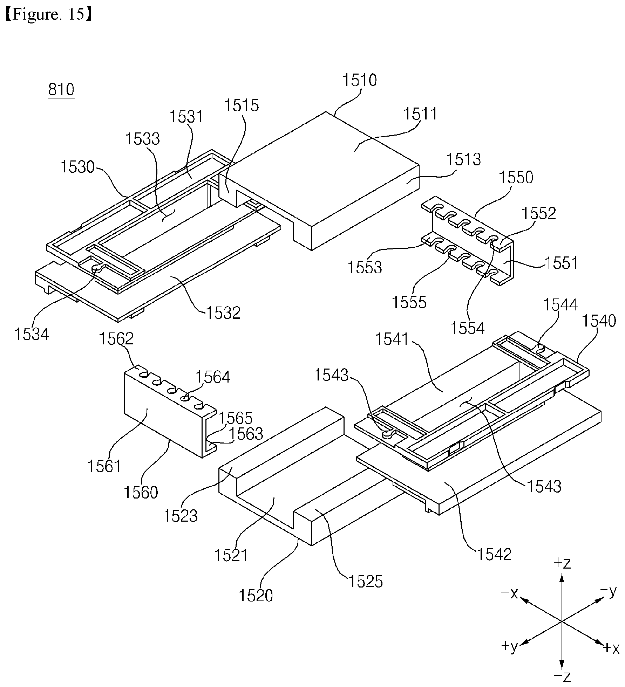

FIG. 15 is an exploded perspective view of a transformer according to embodiments of the present disclosure.

Referring to FIG. 15, a transformer 820 may include a first core 1510, a second core 1520, a first bobbin 1530, a second bobbin 1540, a first coupling member 1550, and/or a second coupling member 1560.

The first core 1510 and the second core 1520 may serve as a path through which magnetic flux passes. The first core 1510 and the second core 1520 may include a magnetic material, such as iron or ferrite, but are not limited thereto. In this disclosure, an example is illustrated in which the first core 1510 and the second core 1520 are formed in shapes that are symmetrical to each other, but are not limited thereto.

The first core 1510 may include a first core body 1511. The first core 1510 may include a first right outer leg 1513 extending downward from the right end of the first core body 1511 and/or a first left outer leg 1515 extending downward from the left end of the first core body 1511.

The second core 1520 may include a second core body 1521. The second core 1520 may include a second left outer leg 1523 extending upward from the left end of the second core body 1521 and/or a second right outer leg 1525 extending upward from the right end of the second core body 1521. When the first core 1510 and the second core 1520 are coupled to each other, a pair of the left outer legs 1515 and 1523 and a pair of the right outer legs 1513 and 1525 may contact each other.

The first bobbin 1530 and the second bobbin 1530 may be made of an insulating resin, but are not limited thereto.

The first bobbin 1530 may include a first upper bobbin portion 1531 and a first lower bobbin portion 1532. A first connection portion 1533 may be formed between the first upper bobbin portion 1531 and the first lower bobbin portion 1532. The first connection portion 1533 may define a first insertion space 1533 into which the pair of the left outer legs 1515 and 1523 is inserted. The first connection portion 1533 may include an inner wall surrounding the pair of the left outer legs 1515 and 1523.

The first bobbin 1530 may include a plurality of fixing ribs 1534. The plurality of fixing ribs 1534 may have a shape protruding outward from the first bobbin 1530. The plurality of fixing ribs 1534 may be formed at the front end of the first upper bobbin portion 1531, the rear end of the first upper bobbin portion 1531, the front end of the first lower bobbin portion 1532, and/or the rear end of the first lower bobbin portion 1532.

The second bobbin 1540 may include a second upper bobbin portion 1541 and a second lower bobbin portion 1542. A second connection portion 1543 may be formed between the second upper bobbin portion 1541 and the second lower bobbin portion 1542. The second connection portion 1543 may define a second insertion space 1543 into which the pair of the right outer legs 1513 and 1525 is inserted. The second connection portion 1543 may include an inner wall surrounding the pair of the right outer legs 1513 and 1525.

The second bobbin 1540 may include a plurality of fixing ribs 1544. The plurality of fixing ribs 1544 may have a shape protruding outward from the second bobbin 1540. The plurality of fixing ribs 1544 may be formed at the front end of the second upper bobbin portion 1541, the rear end of the second upper bobbin portion 1541, the front end of the second lower bobbin portion 1542, and/or the rear end of the second lower bobbin portion 1542.

Each of the primary coil and the secondary coil may have a structure in which a conductive wire is wound several times to form a multi-winding structure. Each of the primary coil and the secondary coil may be wound in a single layer or multi-layer arrangement. The primary coil and the secondary coil may be composed of a Litz wire, but are not limited thereto.

The primary coil may be wound on the first connection portion 1533. For example, the primary coil may be arranged to surround the outer wall of the first connection portion 1533. The primary coil may be wound in a donut shape. The secondary coil may be wound on the second connection portion 1543. For example, the secondary coil may be arranged to surround the outer wall of the second connection portion 1543. The secondary coil may be wound in a donut shape.

A first connection member 1550 may include a first support 1551, a first upper fixing portion 1552 extending along the forward direction from the upper end of the first support 1551, and/or a first lower fixing portion 1553 extending along the forward direction from the lower end of the first support 1551.

The first connection member 1550 may include a plurality of first upper rib grooves 1554 formed in the first upper fixing portion 1552 and/or a plurality of first lower rib grooves 1555 formed in the first lower fixing portion 1553. The shape of the first upper rib groove 1554 and the first lower rib groove 1555 may correspond to the shape of the fixing ribs 1543 and 1544. For example, the fixing rib 1534 formed at the rear end of the first upper bobbin portion 1531 may be inserted into one of the plurality of first upper rib grooves 1554, and the fixing rib 1544 formed at the rear end of the second upper bobbin portion 1541 may be inserted into another one of the plurality of first upper rib grooves 1554.

A second connection member 1560 may include a second support 1561, a second upper fixing portion 1562 extending along the backward direction from the upper end of the second support 1561, and/or a second lower fixing portion 1563 extending along the backward direction from the lower end of the second support 1561.

The second connection member 1560 may include a plurality of second upper rib grooves 1564 formed in the second upper fixing portion 1562 and/or a plurality of second lower rib grooves 1565 formed in the second lower fixing portion 1563. The shape of the second upper rib groove 1564 and the second lower rib groove 1565 may correspond to the shape of the fixing ribs 1543 and 1544. For example, the fixing rib 1534 formed at the front end of the first upper bobbin portion 1531 may be inserted into one of the plurality of second upper rib grooves 1564, and the fixing rib 1544 formed at the front end of the second upper bobbin portion 1541 may be inserted into another one of the plurality of second upper rib grooves 1564.

Here, the mutual inductance and winding ratio of the transformer 820 may vary depending on the performance of the image display apparatus 100, such as a range of voltage values that may be set for the output voltage. In this case, according to the embodiments of the present disclosure, positions of the rib grooves 1554, 1555, 1564, and 1565, into which the fixing ribs 1543 and 1544 are inserted, may be determined based on the mutual inductance and winding ratio of the transformer 820. In addition, sizes of the first core 1510 and the second core 1520 may be determined based on the positions of the rib grooves 1554, 1555, 1564, and 1565 into which the fixing ribs 1543 and 1544 are inserted. Accordingly, the transformer 820 optimized for various performance characteristics of the image display apparatus 100 may be provided in the image display apparatus 100.

As described above, according to at least one embodiment of the present disclosure, the method of controlling the switching elements Q1, Q2, Q3, and Q4 may be changed according to a frequency band of the switching frequency based on a change in load, thereby limiting an excessive increase in the switching frequency.

In addition, according to at least one embodiment of the present disclosure, the method of controlling the switching elements Q1, Q2, Q3, and Q4 may be changed according to a frequency band of the switching frequency based on a magnitude of the output voltage, thereby limiting an excessive increase in the switching frequency.

In addition, according to at least one embodiment of the present disclosure, electromagnetic compatibility (EMC) may be improved without using an additional EMI filter, thereby preventing an increase in the size of the power supply 190 and an increase in production costs.

In addition, according to at least one embodiment of the present disclosure, the transformer 820 optimized for various methods of controlling the switching elements Q1, Q2, Q3, and Q4 may be provided.

Referring to FIGS. 1 to 15, an image display apparatus 100 according to an embodiment of the present disclosure includes: a display 180; a power supply 190 configured to supply driving power to the display 180; and a controller 170, wherein the power supply 190 includes a full-bridge converter 195 including a plurality of switching elements Q1, Q2, Q3, and Q4, wherein the controller 170 is configured to calculate a first switching frequency corresponding to a pulse frequency modulation (PFM) method, and control the plurality of switching elements Q1, Q2, Q3, and Q4 based on the first switching frequency according to the PFM method in response to the first switching frequency being less than a predetermined maximum frequency and control the plurality of switching elements Q1, Q2, Q3, and Q4 based on a second switching frequency according to a phase shift method in response to the first switching frequency being greater than or equal to the maximum frequency.

In addition, according to the embodiment of the present disclosure, the second switching frequency can be predetermined as the maximum frequency while the plurality of switching elements Q1, Q2, Q3, and Q4 are controlled according to the phase shift method.

In addition, according to the embodiment of the present disclosure, the maximum frequency can be predetermined in relation to regulations on conducted emissions (CE).

In addition, according to the embodiment of the present disclosure, the controller 170 can be configured to calculate the first switching frequency based on at least one of a load corresponding to luminance of an image output through the display 180 and a brightness level of a screen.

In addition, according to the embodiment of the present disclosure, while controlling the plurality of switching elements Q1, Q2, Q3, and Q4 according to the phase shift method, the controller 170 can be configured to determine a phase angle, corresponding to a degree to which a phase of a signal transmitted to each of the plurality of the switching elements Q1, Q2, Q3, and Q4 is shifted, based on at least one of the load corresponding to the luminance of the image output through the display 180 and the brightness level of the screen, and configured to output the signal to the plurality of switching elements Q1, Q2, Q3, and Q4 based on the determined phase angle.

In addition, according to the embodiment of the present disclosure, the full-bridge converter 195 can include a first upper arm switching element and a first lower arm switching element that are formed in pair and a second upper arm switching element and a second lower arm switching element that are formed in pair, wherein in response to a ratio of a second time, corresponding to the phase angle, to a first time which is a period corresponding to the second switching frequency, being greater than or equal to a predetermined ratio, the controller 170 can be configured to compare the first switching frequency with the maximum frequency, wherein the second time can correspond to a time during which the first upper arm switching element and the second lower arm switching element are turned on, and the second upper arm switching element and the first lower arm switching element are turned off.

In addition, according to the embodiment of the present disclosure, the predetermined ratio can be 50% or less.

In addition, according to the embodiment of the present disclosure, in response to at least one of an increase in the load and an increase in the brightness level, the controller 170 can be configured to calculate the ratio of the second time to the first time.

In addition, according to the embodiment of the present disclosure, the full-bridge converter 195 can be a Synchronous Rectifier Type Series Resonant Converter.

A method of operating an image display apparatus 100 including a display 180 and a full-bridge converter 195 according to an embodiment of the present disclosure includes: calculating a first switching frequency corresponding to a pulse frequency modulation (PFM) method; in response to the first switching frequency being less than a predetermined maximum frequency, controlling a plurality of switching elements Q1, Q2, Q3, and Q4 included in the full-bridge converter 195 based on the first switching frequency according to the PFM method; and in response to the first switching frequency being greater than or equal to the maximum frequency, controlling the plurality of switching elements Q1, Q2, Q3, and Q4 based on a second switching frequency according to a phase shift method.

The accompanying drawings of the present disclosure aim to facilitate understanding of the present disclosure and should not be construed as limited to the accompanying drawings. Also, the present disclosure is not limited to a specific disclosed form, but includes all modifications, equivalents, and substitutions without departing from the scope and spirit of the present disclosure.

The operating method according to embodiments of the present disclosure may be implemented as codes that may be read by a processor in a recording medium that may be read by the processor. The processor-readable recording medium may include any type of recording devices in which data that may be read by the processor is stored. Examples of the processor-readable recording medium include ROM, RAM, CD-ROM, a magnetic tape, a floppy disc, optical data storage devices, and the like. In addition, the processor-readable recording medium also includes implementations in the form of carrier waves, e.g., transmission via the Internet. The processor-readable recording medium may be distributed over network-connected computer systems so that processor-readable codes may be stored and executed in a distributed fashion.

Specific embodiments have been described. However, the present disclosure is not limited to the specific embodiments and various modifications may be made without departing from the scope of the present disclosure claimed in the claims, and such modifications should not be individually understood from technical concepts or prospects of the present disclosure.

## Claims

1. An image display apparatus comprising:
a display;
a power supply configured to supply driving power to the display; and
a controller,
wherein the power supply comprises a full-bridge converter including a plurality of switching elements,
wherein the controller is configured to:
calculate a first switching frequency corresponding to a pulse frequency modulation (PFM) method,
control the plurality of switching elements based on the first switching frequency according to the PFM method in response to the first switching frequency being less than a predetermined maximum frequency, and
control the plurality of switching elements based on a second switching frequency according to a phase shift method in response to the first switching frequency being greater than or equal to the maximum frequency.

2. The image display apparatus of claim 1, wherein the second switching frequency is predetermined as the maximum frequency while the plurality of switching elements are controlled according to the phase shift method.

3. The image display apparatus of claim 1, wherein the maximum frequency is predetermined in relation to regulations on conducted emissions (CE).

4. The image display apparatus of claim 1, wherein the controller is configured to calculate the first switching frequency based on at least one of a load corresponding to luminance of an image output through the display and a brightness level of a screen.

5. The image display apparatus of claim 1, wherein while controlling the plurality of switching elements according to the phase shift method, the controller is configured to:
determine a phase angle, corresponding to a degree to which a phase of a signal transmitted to each of the plurality of the switching elements is shifted, based on at least one of the load corresponding to the luminance of the image output through the display and the brightness level of the screen, and
output the signal to the plurality of switching elements based on the determined phase angle.

6. The image display apparatus of claim 5, wherein the full-bridge converter comprises a first upper arm switching element and a first lower arm switching element that are formed in pair and a second upper arm switching element and a second lower arm switching element that are formed in pair,
wherein in response to a ratio of a second time, corresponding to the phase angle, to a first time which is a period corresponding to the second switching frequency, being greater than or equal to a predetermined ratio, the controller is configured to compare the first switching frequency with the maximum frequency,
wherein the second time corresponds to a time during which the first upper arm switching element and the second lower arm switching element are turned on, and the second upper arm switching element and the first lower arm switching element are turned off.

7. The image display apparatus of claim 6, wherein the predetermined ratio is 50% or less.

8. The image display apparatus of claim 6, wherein in response to at least one of an increase in the load and an increase in the brightness level, the controller is configured to calculate the ratio of the second time to the first time.

9. The image display apparatus of claim 1, wherein the full-bridge converter is a Synchronous Rectifier Type Series Resonant Converter.

10. A method of operating an image display apparatus including a full-bridge converter, the method comprising:
calculating a first switching frequency corresponding to a pulse frequency modulation (PFM) method;
in response to the first switching frequency being less than a predetermined maximum frequency, controlling a plurality of switching elements included in the full-bridge converter based on the first switching frequency according to the PFM method;
and in response to the first switching frequency being greater than or equal to the maximum frequency, controlling the plurality of switching elements based on a second switching frequency according to a phase shift method.
